Europäisches Patentamt

(19) European Patent Office

Office européen des brevets

(11) Publication number: 0 097 508

A1

(12) # EUROPEAN PATENT APPLICATION

(21) Application number: 83303528.0

(22) Date of filing: 20.06.83

(51) Int. Cl.³: H 01 M 4/92
H 01 M 4/96

(30) Priority: 21.06.82 US 390459
01.04.83 US 478981

(43) Date of publication of application:
04.01.84 Bulletin 84/1

(84) Designated Contracting States:
AT BE CH DE FR GB IT LI LU NL SE

(71) Applicant: ENGELHARD CORPORATION
70 Wood Avenue South
Iselin New Jersey 08830(US)

(72) Inventor: Feins, Irvin R.
50 Mitchell Avenue
East Brunswick New Jersey(US)

(72) Inventor: Dettling, Joseph C.
15 California Drive
Jackson New Jersey(US)

(72) Inventor: Wan, Chong-Zong
10 Layne Road
Somerset New Jersey(US)

(72) Inventor: Farrauto, Robert J.
277 Seneca Place
Westfield New Jersey(US)

(74) Representative: Colgan, Stephen James et al,
CARPMAELS & RANSFORD 43 Bloomsbury Square
London WC1A 2RA.(GB)

(54) Improved phosphoric acid fuel cell electrode.

(57) An improved electrode for use in a phosphoric acid containing fuel cell comprising a composition containing a precious metal and an oxide of germanium, chromium, tungsten, niobium, zirconium, hafnium, tantalum, or gallium in an amount sufficient to extend the period of efficient operation of said electrode.

EP 0 097 508 A1

Case 80-27A

IMPROVED PHOSPHORIC ACID FUEL CELL ELECTRODE

The present invention relates to a class of electrodes, preferably cathodes, for phosphoric acid based fuel cells, and to a method for increasing the efficient operating life of such electrodes, by depositing on a corrosion-resistant carbon support a mixture of a platinum group metal and an oxide of one or more of germanium, chromium, tungsten, niobium, zirconium, hafnium, tantalum, and gallium.

Generally speaking, a fuel cell is an electrochemical device for obtaining direct conversion of fuel, such as hydrogen and oxidant such as oxygen or air to a low voltage DC current. Typically, such cells comprise a fuel electrode (anode), an oxidant electrode (cathode), an electrolyte positioned between the electrodes, and means for separately introducing fuel and oxidant to the respective electrode.

In operation, fuel (such as hydrogen or suitable hydrocarbon) is oxidized at the anode in the presence of an electrocatalyst with an electrolyte to form the corresponding hydronium ion. Oxygen or oxygen-containing gas such as air is fed to the cathode, where it is reduced at the electrocatalytic surface in the presence of an electrolyte with corresponding consumption of electrons transferred from the anode via an external circuit. The resulting potential between anode and cathode can be usefully applied to perform tasks compatible with direct current or converted to alternating current.

Generally speaking oxygen reduction promoting catalysts are Group VIII metals of platinum, palladium, ruthenium, iridium, osmium, or combinations thereof, and alloys thereof with various non-precious metals, such as Class 1(b) and others. In the operating state, these metals may contain oxides or other derivatives thereof. Catalysts of this type are disclosed, for instance, in U.S.P. 3,962,139. For purposes of convenience, efficiency and durability, such catalyst material is often prepared by dispersing colloids onto a carrier, or by dissolving precursor salts in solution which may then be applied to a carrier or directly onto a support, and activated by known techniques.

A variety of supporting materials have been utilized with varying degrees of success. Metal-type electrodes, such as nickel electrodes, for instance, can be made which are permeable to gaseous fuel, such as hydrogen, and are relatively easy to fabricate. They are, however, susceptible to corrosive attack by strong acid electrolytes, such as phosphoric acid, causing shortened life, substantial maintenance expense and attendant variations in output.

Alternatively, carbon electrodes with applied precious metal catalysts have been used with some success.

In addition, the output voltage of such cells tends to fluctuate and progressingly decrease due to direct or indirect effect of sintering effect on the precious metal and/or carbon carrier.

When Group VIII metal-containing compositions, particularly platinum electrocatalytic compositions, are applied to carbon supports, reduced and used as a cathode in a phosphoric acid fuel cell system, (ref. J.

Electrochem Soc. 127 1219, 1980), the surface area of the precious metal catalyst progressively decreases, shortening the efficient operating life span of the electrode and necessitating the added expense and inconvenience of built-in over-capacity. This problem is sometimes referred to as "Sintering", and is believed caused by the migration of small precious metal (e.g. platinum) crystallites across the electrode surface with the formation of larger crystallite masses. The resulting loss of active metal surface area is correlated to progressive loss in cell output and overall efficiency.

Previous attempts at improving electrodes for use in fuel cells in general have been to alloy a platinum group metal with some other metal such as vanadium, aluminum, chromium, and the like, c.f. U.S. 4,202,934 and 4,186,110. Other attempts have been to deposit secondary metals, oxides and hydroxides on top of and around an already deposited platinum; c.f. U.S. 4,137,372 and 4,081,409. Still others have deposited a plurality of metal salts and reduced them to the actual metals; c.f. U.S. 3,340,097.

Canadian 1,070,290 claims a method for the production of an anode for a fuel cell by applying a co-catalyst to the surface of a catalytic metal by covering the catalytic metal with a layer of hydrogen and then immersing it into a non-etching solution of a soluble form of the co-catalyst; i.e. metal, oxide or hydroxide, with the co-catalyst forming a discontinuous layer.

It is an object of the present invention to minimize or avoid acid phosphoric electrolyte-induced corrosion of electrodes in phosphoric acid fuel cells and fully utilize the potential of carbon-supported Group VIII precious metal electrodes operating in such cells under the corrosive conditions.

It is a further specific object of the present invention to minimize sintering of platinum/carbon-coated electrodes operating in excess of 300°F in fuel cells using phosphoric acid electrolyte.

The above objects are achieved by use of an electrode which comprises:

(a) a support, such as wetproofed graphite paper, metal, tungsten carbide, and the like;

(b) a corrosion-resistant, to phosphoric acid, conductive carbon carrier, such as conductive heat-treated carbon powder or carbon black or tungsten carbide and the like;

(c) a catalyst material deposited on said carrier wherein the catalyst material is a mixture of at least one Group VIII precious metal, i.e. platinum, and an electrode-improving amount of at least one oxide of chromium, gallium, germanium, zirconium, niobium, hafnium, tantalum, and tungsten; and

(d) a wet-proofing binder.

Preferably, the oxide is selected from germanium oxide, gallium oxide, tantalum oxide and tungsten oxide. Most preferably, it is either tungsten or tantalum oxide. There is no alloy of the metal of the oxide and the Group VIII precious metal.

Generally, the electrode-improving amount of the oxide is less than about 30% by weight of the weight of the carrier. Preferably, less than about 20%, more preferably, less than about 15%. It has been found, particularly when the oxide is germanium oxide, that too large quantities of the oxide may be detrimental to extending the life of the electrode and that washing the coated carrier with hot water to remove some of the oxide has resulted in improved results.

The Group VIII metal is used in catalytic amounts. Generally, this will be from about 0.1 to 30%, preferably, about 4 to 20%, and most preferably, about 5 to 15%, all by weight based on the weight of the carrier.

The catalyst-coated carrier particles are then combined with binders such as Teflon solutions

5         0097508

(tetrafluoroethylene) or other polymeric materials to provide a waterproof structure for the carrier particles (wet-proofing binder), and the mixture is then deposited onto a support such as a Teflon-wetproofed graphite paper or piece of metal. In general, the Group VIII catalyst metal loading on the support will be in the range of about 0.1 to 2 $mg/cm^2$ of support, preferably, about 0.2 to 1 $mg/cm^2$, and most preferably, about 0.3 to 0.7 $mg/cm^2$.

Carrier materials suitable for use in the present invention are generally a form of powdered activated carbon or conductive carbon black such as Vulcan$^{TM}$ XC72R, XC72, Columbian Conductex$^{TM}$ 975, or the like. These carrier materials will generally have a surface area of from about 60-300 $m^2/g$ and a particle size of about 0.5-50 microns. These materials are generally prewashed in mild acetic acid and then slurried in acidified deionized water containing the catalytic metal and the metal oxides which are to be deposited thereon.

Group VIII precious metal components of catalyst material within the scope of the present invention such as above-noted are conveniently applied to the carrier from a solution, and then reduced and dried as desired.

The Group VIII precious metal component is applied as a solution, either along with the metal oxide component or in separate solutions, to powdered conductive carbon carrier which is, in turn, deposited or supported on graphite such as a monolith or graphite paper. For germanium oxide, it is preferable to use a single solution of the Group VIII metal and the oxide.

Deposition of the catalyst-coated carrier onto the support is conveniently effected by suspending the carrier in a liquid such as water and directly depositing the wetted particles onto the support by filtration techniques or, alternatively, by applying it as a dry powder to a porous support and then wetting the surface by drawing water or electrolyte through the support.

The Group VIII catalytic metals are generally used in the form of an acid or salt such as chloroplatinic acid, a chloroplatinate, solubilized $H_2Pt(OH)_6$, or the like. Preferably, the metal is platinum and, most preferably, it is used as solubilized $H_2Pt(OH)_6$.

The metal oxide component, which is deposited along with or after deposition of the catalytic metal, is generally dissolved in various acids such as acetic, hydrochloric, or nitric, or in dilute bases such as ammonium hydroxide. The following compounds may be used to provide the metal oxide: germanium oxide, tungstic acid, chromium chloride, zirconyl nitrate, zirconyl chloride, gallium nitrate, niobium oxalate, hafnium nitrate, tantalum oxalate, and the like. Thus, either the oxide itself may be used or a compound which dissolves and can be converted to form the oxide.

The above-described invention provides an improved electrode for phosphoric acid type fuel cells in that the resultant fuel cell has a longer operating life. Also there is a reduction in metal migration and a reduction in the loss of active metal surface area.

In the following non-limiting examples, all parts and percents are by weight unless otherwise specified.

### EXAMPLE I  Pt/GeO$_2$/Carbon

Forty-five (45) grams of heat-treated conductive carbon black (Cabot Vulcan XC72R) (Surface Area 110m$^2$/g) prewashed in aqueous (.1N) acetic acid and slurried in about 0.78 liter of deionized water containing about 2 ml of glacial acetic acid plus 0.61 grams of GeO$_2$. Two hundred ml of aqueous 2.5% Pt as H$_2$Pt(OH)$_6$ solubilized in water with an amine at room temperature are added to the slurry with stirring, and the slurry temperature gradually raised to about 95°C for a two (2) hour period with the gradual addition of 25 ml of 5% formic acid as a reducing agent. The slurry is then cooled, filtered and washed with deionized water. The filter cake is then dried at 95°C for sixteen (16) hours in flowing nitrogen.

### EXAMPLE II  (Control)  Pt/Carbon

Example I is repeated without the addition of GeO$_2$ to the carbon slurry.

### EXAMPLE III  Pt/SiO$_2$/Carbon (Comparative)

Fifteen grams of Pt/carbon sample as prepared in Example II are slurried in 0.3 liter of deionized water. Fifty ml of aqueous solution containing 3.5g Na$_2$SiO$_3$.9H$_2$O are added to the slurry at room temperature and then further titrated with 5% aqueous hydrochloric acid solution to pH=6.0; the slurry is then filtered, washed and dried under nitrogen at 95°C for sixteen hours.

### EXAMPLE IV  Pt/WO$_3$/Carbon

Fifteen grams of Pt/Carbon sample as prepared in Example II are slurried in 0.3 liter of deionized water. Fifty ml of aqueous solution containing 0.8 g H$_2$WO$_4$ dissolved in NH$_4$OH and a small amount of hydrazine are added to the slurry at room temperature and then further titrated with 5% aqueous acetic acid solution to pH=5.0; the slurry is then filtered, washed and dried under nitrogen at 95°C for sixteen hours.

### EXAMPLE V  Pt/Cr$_2$O$_3$/Carbon

Fifteen grams of Pt/Carbon sample as prepared in Example II are slurried in 0.3 liter of deionized water. Fifty ml of aqueous solution containing 1.3 g $CrCl_3 \cdot 6H_2O$ are added to the slurry at room temperature and then further titrated with 2% $NH_4OH$ solution to pH=7.0; the slurry is then filtered, washed and dried under nitrogen at 95°C for sixteen hours. The presence of $Cr_2O_3$ is confirmed by x-ray diffraction analysis after the sample is calcined in $N_2$ at 400°C.

EXAMPLE VI    $Pt/Ta_2O_5/Carbon$

Fifteen grams of Pt/Carbon sample as prepared in Example II are slurried in 0.3 liter of deionized water. Fifty ml of aqueous solution containing 4.4g tantalum oxalate solution ($Ta_2O_5$    17.06%) are added to the slurry at room temperature and then further titrated with 2% $NH_4OH$ solution to pH = 7.0; · the slurry is then filtered, washed and dried under nitrogen at 95°C for sixteen hours. The sample is then calcined in nitrogen at 400°C for one hour.

EXAMPLE VII    $Pt/Ga_2O_3/Carbon$

Fifteen grams of Pt/Carbon sample as prepared in Example II are slurried in 0.3 liter of deionized water. Fifty ml of aqueous solution containing 0.85g $GaCl_3$ are added to the slurry at room temperature and then further titrated with 1% $N_2H_4$ solution to pH = 7.0; the slurry is then filtered, washed and dried under nitrogen at 95°C for sixteen hours. The sample is then calcined in nitrogen at 400°C for one hour.

EXAMPLE VIII    Electrode Fabrication and Testing

(A)  Carbon supported platinum catalyst material of Example II (Control) is ultrasonically dispersed in an aqueous solution of TEFLON (TFE-30). The catalyst/-TEFLON suspension is then precipitated out by addition of $AlCl_3$. The floc, having a composition of approximately 5% platinum, 50% carbon and 45% TFE-30 by weight, excluding water, is filtered onto a TEFLON-wetproofed graphite paper substrate to obtain a platinum loading of 0.46

$mg/cm^2$. The filter cake and paper are then dried, rolled and sintered at 360°C for 15 minutes. The resulting cathode, identified as E-1, is evaluated in a single cell phosphoric acid test fuel cell operating at 190°C (150ASF) using $H_2$-air feed. The results are reported in Table I infra.

(B) Step A is repeated to obtain three test cathodes using $Pt/GeO_2$ on carbon material of Example I, $Pt/WO_3$ catalyst material from Example IV, and $Pt/Ta_2O_5$ catalyst material from Example VI. The resulting test cathodes are identified respectively, as E-2, E-3, and E-4 evaluated in identical single cell phosphoric acid test fuel cells at 190°C (150 ASF), using $H_2$-air feed. The test results are reported in Table I infra.

As can be seen below the cathodes of the present invention are superior and have not deteriorated as fast as the control (E-1).

### TABLE I

### Results of Example VII

| Cathode | Metal Oxide in Catalyst | Cell Voltage in Millivolts (IR-Free) | | |
|---------|-------------------------|----------|-----------|----------|
| | | 250 hrs. | 1000 hrs. | 1500 hrs |
| E-1 | -- | 674 | 660 | 658 |
| E-2 | $GeO_2$ | 680 | 672 | 669 |
| E-3 | $WO_3$ | 685 | 677 | 674 |
| E-4 | $Ta_2O_5$ | 683 | 681 | 679 |

EXAMPLE IX   Electrocatalyst Aging Various oxide containing catalysts are prepared according to the procedures described in the above Examples using the same carbon supported platinum material of Example II. The oxide containing catalysts are then heat treated in nitrogen at 400°C for one hour. The platinum crystallite sizes of each catalyst determined by XRD line broadening and the metal oxide content of each catalyst which can be identified by XRD are reported in Table II infra. 0.3 grams of each resulting catalyst are immersed in 20 grams concentrated phosphoric acid (105% as $H_3PO_4$) respectively to form a slurry saturated with air at 204°C for 72 hours at open circuit conditions. It is evidenced that the sintering of platinum of the catalyst under such conditions simulates that platinum sintering after 2000 hours in a single cell test as described in Example VIII. The growth of Pt crystallite of each catalyst is re-examined by XRD line broadening and reported in Table II infra.

TABLE II

| Metal Oxide in Catalyst | Metal Oxide Content (Nominal) | Platinum Crystallite Size Pt(III), Å | |
|---|---|---|---|
| | | Fresh | Aged |
| – | – | 27 | 68 |
| $WO_3$ | 13.8% | 27 | 39 |
| $Ga_2O_3$ | 6% | 27 | 43 |
| $Ta_2O_5$ | 7.9% | 27 | 45 |
| $ZrO_2$ | 11.3% | 27 | 52 |
| $HfO_2$ | 14.6% | 27 | 54 |
| $GeO_2$ | 5% | amorphous | 55 |
| $Cr_2O_3$ | 5% | 27 | 56 |

The results show that the electrocatalysts of the present invention have a much slower platinum sintering rate than those not containing a metal oxide component.

CLAIMS

1.   An electrode for use in a phosphoric acid containing fuel cell which is characterized by:

(a)   a support;

(b)   a phosphoric acid resistant conductive carrier;

(c)   a mixture of a catalytic amount of a Group VIII precious metal and an electrode-improving amount of at least one oxide of a metal selected from the group consisting of chromium, gallium, germanium, zirconium, niobium, hafnium, tantalum, and tungsten; and

(d)   a wet-proofing binder.

2.   The electrode of Claim 1 wherein the oxide is selected from germanium oxide, tungsten oxide, gallium oxide and tantalum oxide.

3.   The electrode of Claim 1 wherein the oxide is present in an amount up to about 30% by weight of the weight of the carrier.

4.   The electrode of Claim 3 wherein the oxide content is up to about 15%.

5.   The electrode of Claim 4 wherein the Group VIII precious metal is present in an amount of about 5 to 15% by weight of the weight of the carrier.

6.   The electrode of Claim 1 wherein the carrier which contains the mixture is admixed with the wet-proofing binder prior to being deposited on the support.

7.   The electrode of Claim 1 wherein the support is graphite paper; the Group VIII precious metal is platinum; the metal oxide is selected from gallium oxide, tantalum oxide, germanium oxide, and tungsten oxide; the oxide content is less than about 15% by weight of the carrier; the Group VIII precious metal content is about 5 to 15% by weight of the carrier; and the wet-proofing binder is tetrafluoroethylene.

8. A method for minimizing metal migration and loss of active metal surface area of carbon/Group VIII precious metal electrodes for fuel cells operating in the presence of phosphoric acid which comprises depositing an oxide of a metal selected from the group consisting of chromium, gallium, germanium, zirconium, niobium, hafnium, tantalum, and tungsten, along with the Group VIII precious metal and maintaining the oxide in an oxidized state.

9. The method of Claim 8 wherein the oxide is selected from gallium oxide, germanium oxide, tantalum oxide, and tungsten oxide.

10. The method of Claim 9 wherein the oxide is selected from tantalum oxide and tungsten oxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-4 017 663 (R.D. BREAULT) * Claims 1,2,8; column 3, lines 26-46 * | 1,2,6 | H 01 M 4/92 H 01 M 4/96 |
| X | US-A-4 031 292 (G.L. HERVERT) * Column 8, lines 19-25; column 8, line 58 - column 9, line 11; column 11, lines 7-13; claim 1 * | 1,2,6 | |
| Y | JOURNAL OF THE ELECTROCHEMICAL SOCIETY, vol. 116, no. 4, April 1969, pages 516-520 D.W. McKEE et al.: "Electrocatalysts for hydrogen/carbon monoxide fuel cell anodes" * Page 516, left-hand column, line 52 - right-hand column, line 2; page 516, table I * | 1,2 | |
| Y | US-A-3 506 494 (O.J. ADLHART) * Claim 1; column 2, lines 7-41; column 3, lines 67-70; column 4, lines 64-68 * | 1,2,6 | TECHNICAL FIELDS SEARCHED (Int. Cl. ³) H 01 M 4/90 H 01 M 4/92 |
| A | FR-A-2 375 905 (UOP) * Page 2, line 22 - page 3, line 4; page 8, line 2; page 10, lines 1-15; claim 1 * | 1 | |

--- -/-

The present search report has been drawn up for all claims

| Place of search | Date of completion of the search | Examiner |
|---|---|---|
| THE HAGUE | 30-09-1983 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

## EUROPEAN SEARCH REPORT

| | DOCUMENTS CONSIDERED TO BE RELEVANT | | Page   2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | CHEMICAL ABSTRACTS, vol. 94, no. 26, Juin 1981, page 170, no. 211496v, Columbus, Ohio, US P.N. ROSS, JR.: "Oxygen reduction on supported platinum alloys and intermetallic compounds in phosphoric acid" & REPORT 1980, LBL-10799, 85 PP * Whole abstract * | | |
| A | EXTENDED ABSTRACTS, vol. 80-2, 1980, pages 73-74, abstract no. 25, Pennington, New Jersey, US P.N. ROSS, JR.: "The reduction of oxygen on the Pt-group IVb and Vb intermetallics in acidic electrolyte" * Whole abstract * | | |
| A | US-A-3 393 100  (L.W. NIEDRACH) | | |
| A | FR-A-2 261 059  (SHELL INTERNATIONALE RESEARCH MAATSCHAPPIJ) * Claims 1,2,3;  page 2, lines 24-32; page 3, lines 4-10; table; example 3 * | | TECHNICAL FIELDS SEARCHED (Int. Cl. ³) |
| A | FR-A-2 115 394  (UNITED AIRCRAFT CORP.) | | |

The present search report has been drawn up for all claims

| Place of search THE HAGUE | Date of completion of the search 30-09-1983 | Examiner D'HONDT J.W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82